# EUROPEAN PATENT SPECIFICATION

(11) **EP 2 688 393 B1**
(45) Date of publication and mention of the grant of the patent: **10.06.2015**
(21) Application number: 11710492.7
(22) Date of filing: 23.03.2011
(51) Int. Cl.: A01G 25/16

(54) **IRRIGATION CONTROL SYSTEM**
BEWÄSSERUNGSREGELUNGSSYSTEM
SYSTÈME DE COMMANDE D'IRRIGATION

(43) Date of publication of application: 29.01.2014
(73) Proprietor: Husqvarna AB, 56182 Huskvarna (SE)
(72) Inventor: HÄNSSLER, Gerd, 88471 Laupheim (DE)
(74) Representative: Finkele, Rolf
(86) International application number: PCT/EP2011/054479
(87) International publication number: WO 2012/126523

(56) References cited:
- EP-A2- 2 196 085
- US-A- 5 021 939
- US-A- 5 337 957
- US-A1- 2006 206 239

## Description

### TECHNICAL FIELD

The present invention relates to an irrigation control system. More particularly, it relates to an irrigation control system to control multiple irrigation channels.

### BACKGROUND

Irrigation control systems for controlling flow of water through multiple watering channels are well known in the art. Such systems typically include a controller with multiple sensors connected to the controller, each sensor being provided for a corresponding watering channel. The controller controls flow through the watering channels based on an output from the corresponding sensor. Such an irrigation control system is known e.g. from US 5,337,957.

However, during operation, a sensor may get disconnected or may malfunction. In such a case, the controller may not be able to optimally control flow through the corresponding watering channel. This may result in improper watering, and lead to uncontrolled watering to vegetation and wastage of water. Moreover, a user may be unaware of any abnormal condition of the irrigation control system and is unable to take any corrective action. Further, providing separate sensors for all the watering channels may increase cost and complexity of the irrigation control system.

Therefore there is a need for an irrigation control system that overcomes the aforementioned problems.

### SUMMARY

In view of the above, it is an objective to solve or at least reduce the problems discussed above. In particular, an objective is to provide an inexpensive, simplified and robust irrigation control system.

The objective is achieved with a novel irrigation control system according to claim 1. The irrigation control system includes a controller for controlling multiple irrigation channels, a sensor interface connected to the controller, multiple sensor connectors corresponding to each of the multiple irrigation channels provided on the sensor interface, and one or more sensors connected to the sensor connectors. A single sensor is connected to a single sensor connector and configured to provide an output to the controller such that the irrigation channel corresponding to the sensor connector is controlled based on the output of the sensor. Further, the output of a single sensor connected to a sensor connector is used to selectively control one or more irrigation channels corresponding to consecutive sensor connectors immediately preceding or following the sensor connector. Moreover, the consecutive sensor connectors are disconnected from the sensors or are connected to defective sensors. Thus, the output of a single sensor may be selectively utilized to control multiple irrigation channels. This may decrease cost and complexity of the irrigation control system. The irrigation control system may also enable the user to conveniently vary the method by which the irrigation channels are being controlled by the sensors, by simply connecting the sensors to the sensor connectors in a particular order. Thus, the sensor interface may have a simple construction including only the sensor connectors as user configurable components.

According to claim 2, the output of a sensor comprises a resistance state. Further, according to claim 3, the resistance state corresponds to one or more soil conditions. Moreover, according to claim 4, the resistance state also corresponds to a defect of the sensor.

According to claim 5, the sensor connector comprises a detector circuit to detect the resistance state of the sensor. Further, according to claim 6, the detector circuit detects a resistance state if the sensor is disconnected from the corresponding sensor connector. Moreover, according to claim 7, the resistance state corresponding to a defect of the sensor is similar to the resistance state corresponding to the disconnection of the sensor from the corresponding sensor connector. Thus, the irrigation control system also detects if a sensor is disconnected or defective, or there is any other abnormal condition related to the sensors. Control strategy of the corresponding irrigation channel may be revised accordingly.

According to claim 8, the sensor outputs its status in a digitally coded manner.

With the scope of the present invention it is also possible to vary the number of sensor connectors and irrigation channels that are assigned to the irrigation control system and which are linked towards each other via the system's controller. These variations are described with respect to claims 9 to 12.

According to claim 9, some of the sensor connectors are not realized physically but do only exist virtually within controller while all of them are assigned to a common physically realized sensor interface, and whereas each of this virtual sensor connectors is assigned to an individually dedicated irrigation channel. According to claim 10 the controller alerts the user in case any of the sensors is defective or does indicate any other abnormal condition, such as, low battery, overheating of the electronic circuit, or a defective sensor cable. According to claim 11 a plurality of irrigation channels are all assigned to a single sensor connector. According to claim 12, the control system incorporates additional irrigation channels to which no sensor connector corresponds to.

According to claim 13, the sensor is a soil moisture sensor or a rain sensor.

According to claim 14 one or more sensors are formed by combining a plurality of single sensors, in particular a moisture sensor and a rain sensor, or wherein one or more the sensor connectors allow the simultaneous connection of a plurality of sensors, in particular a moisture sensor and a rain sensor.

According to claim 15 a one or a plurality of irrigation channels could be additionally controlled based on the status of an additional sensor that is not connected to any of the sensor connectors.

### BRIEF DESCRIPTION OF THE DRAWINGS

The invention will in the following be described in more detail with reference to the enclosed drawings, wherein:
FIG. 1 illustrates a schematic view of an irrigation control system, according to an embodiment of the present invention; and
FIG. 2 illustrates a detailed view of a control assembly of the irrigation control system, according to another embodiment of the present invention.
FIG. 3 illustrates a detailed view of a control assembly of a further embodiment of the irrigation control system, employing virtual sensor connectors linked to a digital data bus.
FIG. 4 illustrates a detailed view of a control assembly of a further embodiment of the irrigation control system, employing a plurality of irrigation channels that are all linked to a single sensor connector and thus are all controlled based on the status of a single sensor.
FIG. 5 illustrates a detailed view of a control assembly of a further embodiment of the irrigation control system, employing additional irrigation channels that do not correspond to any of the sensor connectors.

### DESCRIPTION OF EMBODIMENTS

The present invention will be described more fully hereinafter with reference to the accompanying drawings, in which preferred embodiments of the invention are shown. This invention may, however, be embodied in many different forms herein; rather, these embodiments are provided so that this disclosure will be thorough and complete, and will fully convey the scope of the invention to those skilled in the art. In the drawings, like numbers refer to like references.

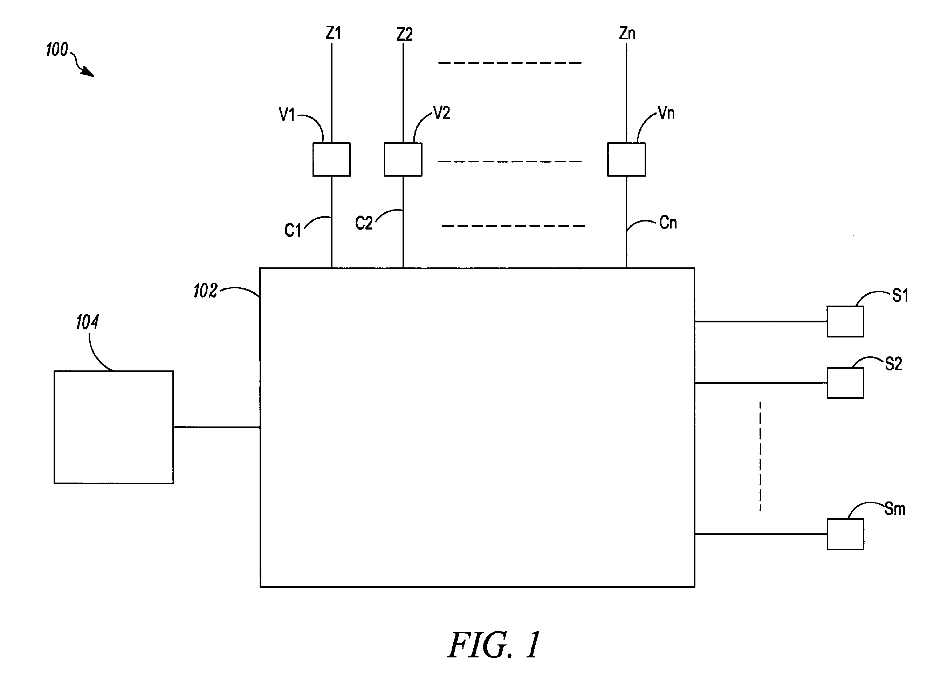

FIG. **1** shows a schematic view of an irrigation control system **100,** according to an embodiment of the present invention. The irrigation control system **100** includes a control assembly **102** for controlling multiple irrigation channels **C1**, **C2,** ..., **Cn** (hereinafter referred to as "the channels"). The number of channels may be any number **n** without limiting the scope of the present invention. Each of the channels **C1** to **Cn** includes a valve **V1**, **V2,** ..., **Vn** for controlling flow of water or any other irrigating liquid (E.g., water mixed with an additive) to corresponding irrigation zones **Z1** to **Zn.** The control assembly **102** may be connected to a source **104** of the irrigating liquid and distribute the irrigating liquid among the multiple irrigation channels **C1** to **Cn** by controlling the valves **V1** to **Vn.** The valves **V1** to **Vn** may be any type of valve, for example, solenoid valves, electric motor actuated valves, or the like. The irrigation zones **Z1** to **Zn** may be part of a single landscape or separate landscapes. The landscapes may be a garden, golf course, lawn, agricultural or horticultural field, or the like. The irrigation zones may also include potted plants. Further, the irrigation control system **100** may utilize sprinkler systems, drip irrigation, sub-surface irrigation, or the like.

In an embodiment of the present invention, the channels **C1** to **Cn** and the valves **V1** to **Vn** may be provided within a housing of the control assembly **102.** Each of the channels **C1** to **Cn** may include connectors (not shown) for connection with hoses or pipes for carrying the irrigating liquid to the corresponding irrigation zones **Z1** to **Zn.** Similarly, a connector may be provided for connecting a hose or a pipe originating from the source **104.** In an alternate embodiment of the present invention, the channels **C1** to **Cn** and the valves **V1** to **Vn** may be external components, and the control assembly **102** controls the valves **V1** to **Vn** via separate control cables (not shown).

In an embodiment of the present invention, the control assembly **102** includes a user interface (not shown) so that a user may control various parameters, for example, irrigation schedules, irrigation modes etc. Further, the user interface may include one or more buttons and knobs, and a display to aid the user in controlling the various parameters.

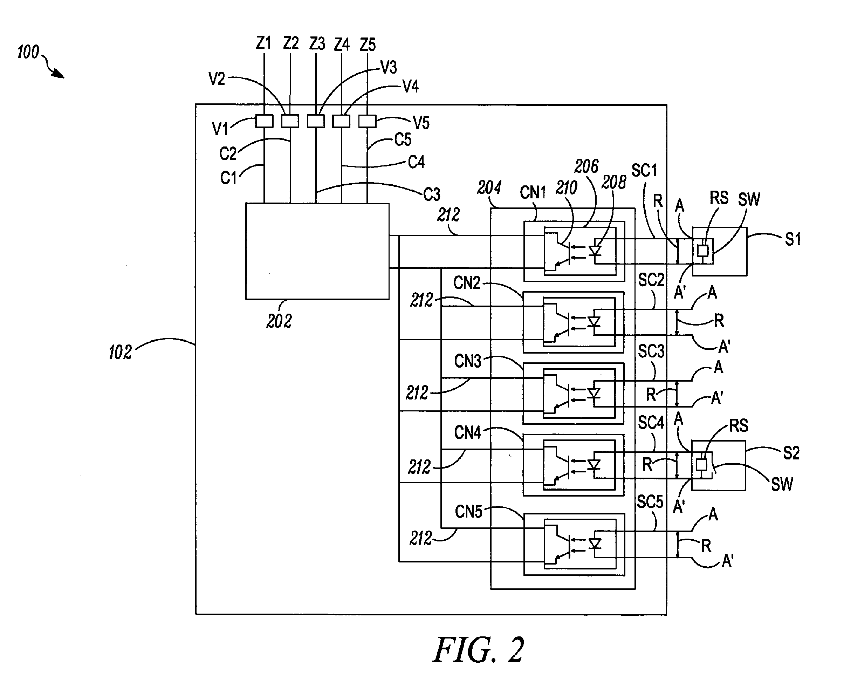

As illustrated in FIG. 1, the control assembly **102** controls the opening and closing of the valves **V1** to **Vn** based on outputs from multiple sensors **S1, S2,** ..., **Sm.** The number of sensors **m** may or may not be equal to the number of channels **n.** The sensors **S1** to **Sm** may be any one or more types of sensors, for example, but not limited to, soil moisture sensors, rain sensors, atmospheric humidity sensors, ambient light sensors, or the like. In various embodiments of the present invention, one or more types of sensors may be provided in a single or multiple irrigation zones. Further, outputs from one or more sensors may be used to control flow through one or more irrigation channels, which is described in more detail with reference to FIG. **2****.**

FIG. **2** illustrates a detailed view of the control assembly **102,** according to another embodiment of the present invention. The control assembly **102** includes a controller **202** and a sensor interface **204** connected to the controller **202.** As illustrated in FIG. **2****,** by way of an example only, five channels **C1** to **C5** are provided with corresponding valves **Z1** to **Z5.** Further, two sensors **S1** and **S2** are provided. It may be apparent to a person ordinarily skilled in the art that there may be any number of channels and sensors within the scope of the present invention.

As illustrated in FIG. **2****,** the sensor interface **204** includes sensor connectors **CN1** to **CN5** corresponding to each of the channels **C1** to **C5.** However, only the sensor connectors **CN1** and **CN4** have the sensors **S1** and, **S2** connected to them via sensor cables **SC1** and **SC4** respectively. The sensor cables **SC2, SC3** and **SC5,** and thus the connectors **CN2, CN3** and **CN5** do not have any sensors connected to them.

In an embodiment of the present invention, the sensors **S1** and **S2** are soil moisture sensors. Each sensor may have a probe (not shown) which is embedded within the soil. The probe may have one or more sensory components configured to detect the level of moisture within the soil. The sensory components may be electrically connected with an electronic circuit to provide an output corresponding to the level of moisture. The various components of the sensor may be powered by a battery mounted on the sensor or by an external power source. The electronic circuit of the sensor may be housed within a housing to safeguard the electronic circuit against moisture, particulate matter, extreme temperatures etc. Further, the electronic circuit of each sensor may be configured to output a variable resistance state **R** between points **A** and **A'** which is indicative of various states of the sensor. For example, the sensor may output a value of the resistance state **R** above a first predetermined threshold **R1** (hereinafter referred to as "the first threshold **R1")** indicative of a dry state of the soil. Further, the sensor may output a value of the resistance state **R** below the first threshold **R1** indicative of a damp sate of the soil. The first threshold **R1** may be substantially equal to 2 kΩ. A third value of the resistance state **R** above a second predetermined threshold **R2** (hereinafter referred to as "the second threshold **R2**") may be indicative of a defect of the sensor. The second threshold **R2** may be substantially equal to 20 kΩ. In various embodiments of the present invention, the resistance state **R** may assume additional values indicative any other abnormal conditions, for example, overheating of the electronic circuit, low battery power, defects in the sensor cables, or the like.

Further, as illustrated in FIG. **2****,** each of the sensors **S1** and **S2** includes a resistor **RS** and a switch **SW** connected parallel to each other between the points **A** and **A'.** In an embodiment of the present invention, a sensor may output a resistance state **R** substantially equal to 0Ω by closing the switch **SW** indicative of a damp state of the soil. For example, as illustrated in FIG. **2****,** the sensor **S1** indicates a damp state of the soil by closing the switch **SW.** Further, a sensor may also output the resistance state **R** substantially equal to the resistor **RS** which is indicative of a dry state of the soil. The resistor **RS** may have a value more than the first threshold **R1,** such as, approximately 10 kΩ. As illustrated in FIG. 2, the sensor **S2** indicates a dry state of the soil by keeping the switch **SW** open. Further, in case any of the sensors **S1** and **S2** are malfunctioning, the resistance state **R** may be an open circuit resistance having a value greater than the second threshold **R2** of 20 kΩ. Further, in case no sensor is connected to a sensor cable, as in the case of sensor cables **SC2, SC3** and **SC5,** the resistance state **R** between the points **A** and **A'** is again an open circuit resistance. Thus, the resistance states corresponding to a disconnected state of the sensor is substantially same as a defective state of the sensor. However, in an alternative embodiment of the present invention, the resistance states corresponding to the disconnected and defective states may be different.

Each sensor may include a user interface including one or more buttons and knobs, and/or a display so that a user may be able to check a current state of the sensor and change a mode of sensor. Various modes of the sensor may include, for example, but not limited to, damp mode, dry mode, normal mode, or the like. In case the sensor is set in damp mode, the first threshold **R1** is set to a higher value relative to the normal mode. Alternatively, if the sensor is set in the dry mode, the first threshold **R1** is set to a lower value relative to the normal mode. Moreover, the sensor may output a resistance value at predetermined sampling intervals instead of providing a constant output. The sampling interval may also be varied by the user.

As illustrated in FIG. **2****,** each of the sensor connectors **CN1** to **CN5** includes a detector circuit **206** adapted to detect the resistance state **R.** In case any of the sensor cables **SC1** to **SC5** are disconnected from the corresponding sensor connectors **CN1** to **CN5,** the detector circuit **206** detects a resistance state indicative of a disconnected state of the sensor connectors **CN1** to **CN5.** The detector circuit **206** includes a light emitting diode (LED) **208** optically coupled to a phototransistor **210.** The LED **208** and the phototransistor **210** form an optical isolator, thereby protecting various other components of the sensor interface **204** and the controller **202** from fluctuations and defects in the sensor cables and the sensors.. The LED **208** emits light of different wavelengths corresponding to different resistance states **R.** The phototransistor **210** outputs a signal dependent on the wavelength of light emitted by the LED **208.** The detector circuit **206** may include additional electronic components (not shown) to process the signal from the phototransistor **210** to output a final signal. The final signal from each of the sensor connectors **CN1** to **CN5** is then transmitted to the controller **202** via electric connections **212.**

However it is obvious for the one skilled in the art that the detector circuit **206** may alternatively include any other electronic components besides the coupling of LED and phototransistor to detect the resistance state **R** of the sensors **S1** to **S5.** There does exist a broad variety of different electric components or circuitry to couple sensors to a detector circuit **206** within the state of the art that are suitable for use within the scope of the present invention.

The controller **202** receives the final signals from all the sensor connectors **CN1** to **CN5.** In an embodiment of the present invention, the controller **202** may include an input/output (I/O) interface (not shown) for electrically connecting the sensor connectors **CN1** to **CN5,** and the valves **V1** to **V5** of the corresponding channels **C1** to **C5.** Further, the controller **202** may include a microprocessor and a memory (both not shown). The microprocessor receives the final signals from the sensor connectors **CN1** and **CN5,** and then processes the final signals according to control programs stored in the memory. Finally, the microprocessor outputs control signals to control the valves **V1** to **V5,** thereby regulating flow of irrigating liquid through the channels **C1** to **C5.** In an embodiment of the present invention, separate control programs are provided for controlling flow through each of the channels **C1** to **C5.** The control programs may include different control strategies based on irrigation requirements of the irrigation zones **Z1** to **Z5.** Further, the control programs may also take into account whether a sensor is disconnected from a particular sensor connector, the sensor is defective or any other abnormal condition.

During operation, flow of irrigating liquid through the channels **C1**, and **C4** is controlled based on the resistance states **R** of the corresponding sensors **S1** and **S2.** As shown in FIG. **2****,** the sensor connectors **CN2, CN3** and **CN5** are not connected to any sensors. In an embodiment of the present invention, according to a control strategy (in the later referred to as 'control strategy 1'), as the sensor **S2,** which is connected to the sensor connector **CN4** immediately following the consecutive sensor connectors **CN2** and **CN3,** the channels **C2** and C3 are also controlled based on the resistance state **R** of the sensor **S2.** Further, according to this control strategy, the channel **C1** could also be controlled based on the output of the sensor **S2,** in case sensor **S1** connected to sensor connector **CN1** would be defective. However, the channel **C5,** which follows the channel **C4,** is not controlled based on the feedback from the sensor **S2.** Thus, flow through the channel **C5** is not controlled by any sensor and may be controlled based on default control strategies, for example, user configurable irrigation schedules or modes. In case one of the sensor connectors **CN2, CN3** or **CN5** would have a sensor connected at a later stage, flow through the corresponding channel **C2, C3** or **C5** would be controlled based on the resistance states of these sensors. According to the control program for the channels **C1** to **C5,** the control methods for a channel based on the resistance state **R** of a sensor connected to a sensor connector corresponding to another channel may be same or different from the control methods when a sensor is directly connected to the corresponding sensor connector. Further, in case any sensor is defective, the corresponding channel may be controlled based on the resistance state **R** of the sensor connected to another sensor connector immediately following the corresponding sensor connector. For example, if the sensor **S1** is defective, the channel **C1** may also be controlled based the output of the sensor **S2.**

The control strategy may enable the user to conveniently vary the method by which the channels **C1** to **C5** are being controlled by the sensors **S1** and **S2,** by simply connecting the sensors **S1** and **S2** to any two of the sensor connectors **CN1** to **CN5** in a particular order. Thus, the sensor interface **204** may have a simple construction including only the sensor connectors **CN1** to **CN5** as user configurable components. The control strategy eliminates the need for a complicated user interface linked with the sensor interface **204** involving one or more buttons and/or a display. Moreover, the control strategy may be conveniently implemented on hardware and may not involve any complex software. For example, a simple logic circuit may be utilized to implement the control strategy. Further the control strategy could also be implemented completely hard wired as a hardware circuit.

The control strategies for the channels **C1** to **C5** described above are for exemplary purposes only, and flow through the channels **C1** to **C5** may be controlled based on any other strategy without the departing from the scope of the present invention. For example, in an alternative embodiment (in the later referred to as 'control strategy 2') of the present invention, the channels **C2** and **C3** may be controlled based on the output of the sensor **S1.** Thus, the sensor **S1,** which is connected to the sensor connector **CN1** immediately preceding the sensor connectors **CN2** and **CN3,** controls the channels **C2** and **C3** corresponding to the sensor connectors **CN2** and **CN3.** Further, the channel **C5** is controlled based on the output state of the sensor **S2.**

In an embodiment of the present invention, the controller **202** alerts the user in case any of the sensors **S1** or **S2** is defective or indicate any other abnormal condition, such as, low battery, overheating of the electronic circuit, or a defective sensor cable. The controller **202** may output an audible alarm or a visual notification via the display of the control assembly **102.** The user may then take corrective action.

According to the exemplary embodiments described in relation to FIG. 2 the sensors **S1, S2,** ..., **Sm**) do indicate their various states they are in (for example damp, dry or defective) using a variable resistance. It is obvious for the one skilled in the art that without departing form the scope of the present invention the indication of these various states by the sensors could well be realized in a different manner. In particular a sensor might digitally code its status using for example a distinct binary code for each of the different status it can be in. There are various methods known in the state of the art on how to transmit the digitally coded status from the sensor and to analyze the code by the controller **202** that are available for use without departing from the scope of the present invention.

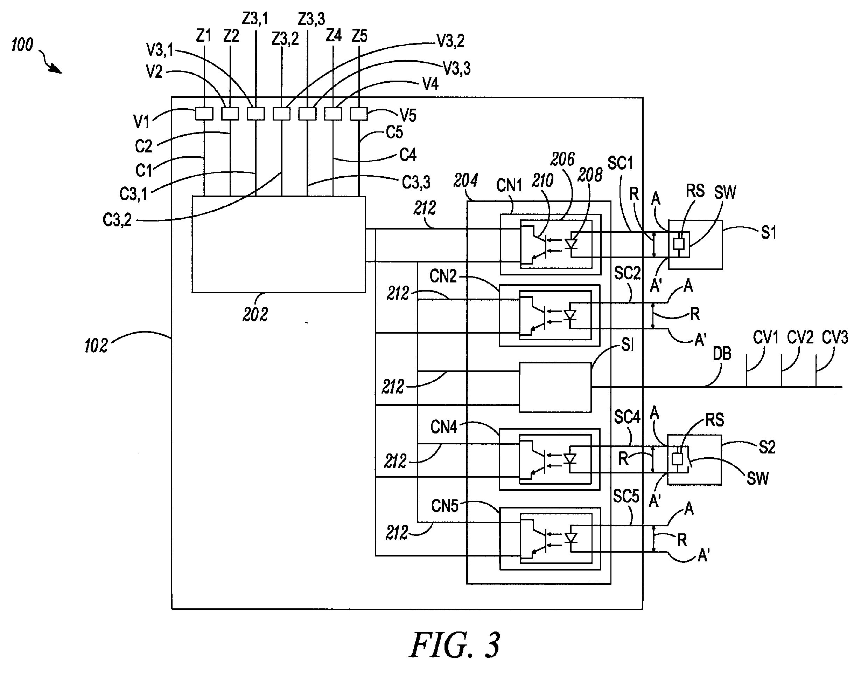

While in the exemplary embodiment described with FIG. 2 all the sensor connectors **CN1** to **CNn** are realized physically it is also possible in a alternative embodiment to realize at least some of the sensor connectors (CN1, CN2, ..., CNn) not physically but have them exist only virtually as shown with the exemplary embodiment of FIG. 3. This means that the sensor connectors **CV1** to CV3 do just virtually exist in the software of the controller **202,** while all of them are assigned to a single common physically realized sensor interface **SI.** In this case a plurality of sensors can be connected to these virtual sensor connectors **CV1** to **CV3** via a digital data bus **DB** or similar electronic bus system that is fixed to the common sensor interface **SI.** Although these sensor connectors **CV1** to **CV3** are only realized virtually each of them is assigned each to an individually dedicated irrigation channel **C3,1** to **C3,3.** All of these individual virtual sensor connectors **CV1** to **CV3** are assigned to the sequence set of sensor connectors **CN1** to **CNn.** In case of the embodiment of FIG. 3 the sequence of sensor connectors would be CN1, CN2, CV1, CV2, CV3, CN4 and CN5. The control of the respective irrigation cannels C1 to C5 would be based on the sensors connected to these sensor connectors in accordance to either 'control strategy 1' or 'control strategy 2' as already described in respect to the embodiment with FIG. 2. With no sensors connected to the CV1 to CV3 as shown with FIG. 3 sensor S2 would control irrigation channels C4, C3,1 C3,2 , C3,3 and C2 in case of 'control strategy 1'.

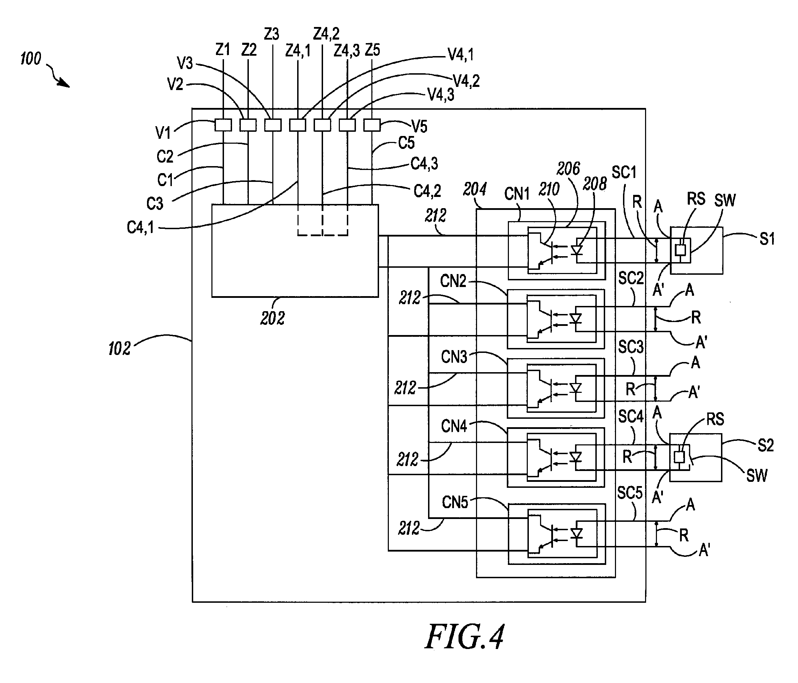

Additionally or alternatively as shown with the exemplary embodiment of FIG. 4 there might be a plurality of irrigation channels **C4,1** to **C4,3** that are all assigned to the single sensor connector **CN4.** In this case this plurality of irrigation channels **C4,1** to **C4,3** are all controlled based on the status of the sensor **S2.**

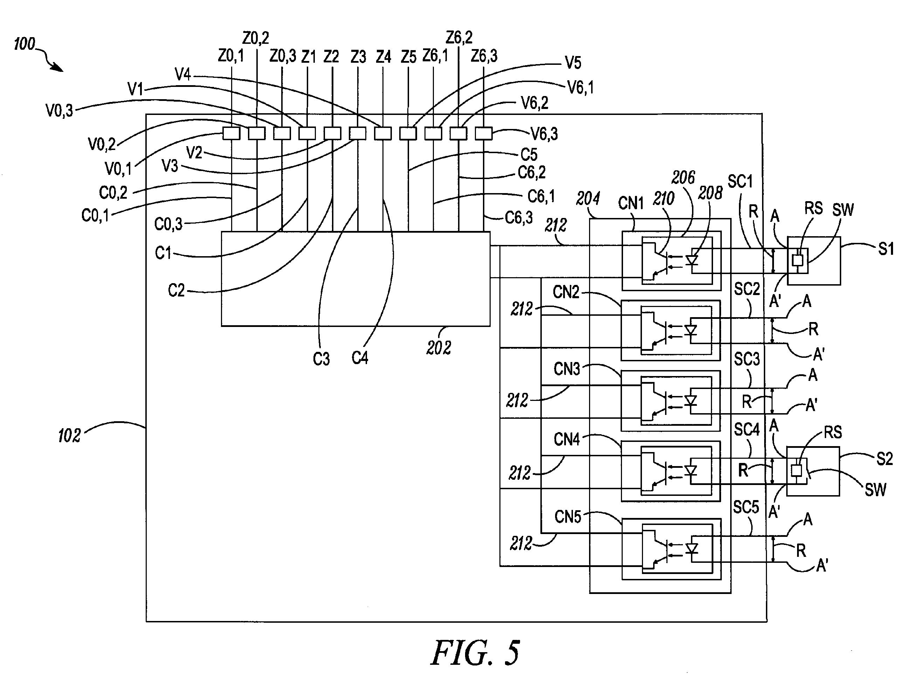

In a further embodiment of the invention as shown with exemplary embodiment of FIG. 5 the irrigation control system **100** might incorporate additional irrigation channels **C0,1** to **C0,3** and **C6,1** to **C6,3** to which none of the sensor connectors **CN1** to **CN5** corresponds to. These additional irrigation channels **C0,1** to **C0,3** and **C6,1** to **C6,3** are treated by controller **202** as they would have virtual sensor connectors **CN0,1** to **CN0,3** or **CN6,1** to **CN6,3** assigned to them. Thus these virtual sensor connectors do either precede or follow the sequence of sensor connectors **CN1** to **CN5** and would accordingly be treated by the controller **202.** Thus with 'control strategy 1' the irrigation channels **C0,1** to **C0,3** would be controlled based on the status of sensor **S1** that is connected to sensor connector **CN1** immediately following the virtual sensor connectors **CN0,1** to **CN0,3.** Irrigation channels **C6,1** to **C6,3** would not be controlled based on any sensor input employing 'control strategy 1' because they follow sensor connector **CN5.** In case of the use of 'control strategy 2' these irrigation channels **C6,1** to **C6,3** would be controlled based on the status of sensor S2 that is immediately preceding these virtual sensor connectors **CN6,1** to **CN6,3.**

Thus, the irrigation control system **100** may control irrigation of multiple irrigation zones with different irrigation requirements. The irrigation control system **100** may also control irrigation based on feedback from multiple sensors. Feedback from a single sensor may be selectively utilized to control irrigation of multiple irrigation zones following a particular control strategy. Moreover, the irrigation control system **100** may also detect and notify the user in case of a sensor being disconnected or defective, or any other abnormal condition related to the sensor or the sensor cable. Control strategies for the irrigation zones may be revised accordingly, in particular the irrigation channel assigned to a sensor connector to which a defective or malfunctional sensor is connected could be said to be no longer controlled on the basis of any sensor signal

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A irrigation control system **(100)** comprising:
a controller **(202)** for controlling multiple irrigation channels (**C1, C2,** ..., **Cn);**
a sensor interface **(204)** connected to the controller **(202);**
multiple sensor connectors **(CN1, CN2,** ..., **CNn**) corresponding to each of the multiple irrigation channels (**C1, C2,** ..., **Cn**) provided on the sensor interface **(204);** and
one or more sensors (**S1, S2,** ..., **Sm**) connected to the sensor connectors **(CN1, CN2, ..., CNn),** a single sensor (**S1, S2)** being connected to a single sensor connector **(CN1, CN4)** and configured to provide an output to the controller **(202)** such that the irrigation channel (**C1, C4)** corresponding to the sensor connector **(CN1, CN4)** is controlled based on the output of the sensor (**S1, S2);**
**characterized in that,**
the output of a single sensor (**S1, S2)** connected to a sensor connector **(CN1, CN4)** is used to selectively control one or more irrigation channels **(C2, C3, C5)** corresponding to consecutive sensor connectors **(CN2, CN3, CN5)** immediately preceding or following the sensor connector **(CN1, CN4),** the consecutive sensor connectors **(CN2, CN3, CN5)** being disconnected from the sensors or being connected to defective sensors.

2. An irrigation control system **(100)** according to claims 1, wherein the output of a sensor comprises a resistance state **(R).**

3. An irrigation control system **(100)** according to claim 2, the resistance state **(R)** corresponds to one or more soil conditions.

4. An irrigation control system **(100)** according to claim 2, the resistance state **(R)** corresponds to a defect of the sensor.

5. An irrigation control system **(100)** according to claims 2 to 4, wherein each sensor connector comprises a detector circuit **(206)** to detect the resistance state **(R)** of the sensor.

6. An irrigation control system **(100)** according to claim 5, the detector circuit **(206)** detects a resistance state if the sensor is disconnected from the corresponding sensor connector.

7. An irrigation control system **(100)** according to claim 6, wherein the resistance state corresponding to a defect of the sensor is similar to the resistance state corresponding to the disconnection of the sensor from the corresponding sensor connector.

8. An irrigation control system **(100)** according to claim 1, wherein the output of a sensor comprises a digitally coded status.

9. An irrigation control system **(100)** according to any of the preceding claims, wherein some of the sensor connectors **(CV1, CV2, CV3)** are not realized physically but do only exist virtually within controller **202** while all of them are assigned to a common physically realized sensor interface **SI,** and whereas each of this virtual sensor connectors **(CV1, CV2, CV3)** is assigned to an individually dedicated irrigation channel (**C3,1, C3,2, C3,3).**

10. An irrigation control system **(100)** according to any of the preceding claims, wherein the controller **202** alerts the user in case any of the sensors **S1** or **S2** is defective or indicate any other abnormal condition, such as, low battery, overheating of the electronic circuit, or a defective sensor cable.

11. An irrigation control system **(100)** according to any of the preceding claims, wherein a plurality of irrigation channels (**C4,1, C4,2, C4,3)** are all assigned to a single sensor connector **(CN1, CN2,** ..., **CNn**).

12. An irrigation control system **(100)** according to any of the preceding claims, wherein the control system **(100)** incorporates additional irrigation channels (**C0,1**, **C0,2, C0,3, C6,1, C6,2, C6,3,)** to which no sensor connector **(CN1, CN2,** ..., CNn) corresponds to.

13. An irrigation control system **(100)** according to any of the preceding claims, wherein the sensor is a soil moisture sensor or a rain sensor.

14. An irrigation control system **(100)** according to any of the preceding claims, wherein one or more sensors (**S1, S2, ..,Sm)** are formed by combining a plurality of single sensors, in particular a moisture sensor and a rain sensor, or wherein one or more the sensor connectors **(CN1, ..., CNn)** allow the simultaneous connection of a plurality of sensors, in particular a moisture sensor and a rain sensor.

15. An irrigation control system **(100)** according to any of the preceding claims, wherein one or a plurality of irrigation channels (**C1,** ... **Cn)** could be additionally controlled based on the status of an additional sensor that is not connected to any of the sensor connectors **(CN1, ..., CNn).**

## Patentansprüche

1. Bewässerungssteuerungssystem (100), umfassend:
eine Steuerung (202) zum Steuern mehrerer Bewässerungskanäle (C1, C2, ..., Cn);
eine Sensor-Schnittstelle (204), die mit der Steuerung (202) verbunden ist;
mehrere Sensor-Verbinder (CN1, CN2, ..., CNn), die jeweils einem der mehreren Bewässerungskanäle (C1, C2, ..., Cn) entsprechen, die an der Sensor-Schnittstelle (204) bereitgestellt sind; und
einen oder mehrere Sensoren (S1, S2, ..., Sm), die mit den Sensor-Verbindern (CN1, CN2, ..., CNn) verbunden sind, wobei ein einzelner Sensor (S1, S2) mit einem einzelnen Sensorverbinder (CN1, CN4) verbunden und dafür ausgelegt ist, eine Ausgabe an die Steuerung (202) auszugeben, so dass der Bewässerungskanal (C1, C4), der dem Sensor-Verbinder (CN1, CN4) entspricht, basierend auf der Ausgabe des Sensors (S1, S2) gesteuert wird;
**dadurch gekennzeichnet, dass**
der Ausgang eines einzelnen Sensors (S1, S2), der mit einem Sensor-Verbinder (CN1, CN4) verbunden ist, dafür verwendet wird, selektiv einen oder mehrere Bewässerungskanäle (C2, C3, C5), die aufeinanderfolgenden Sensor-Verbindern (CN2, CN3, CN5), die dem Sensor-Verbinder (CN1, CN4) unmittelbar vorangehen oder nachfolgen, entsprechen, zu steuern, wobei die aufeinanderfolgenden Sensor-Verbinder (CN2, CN3, CN5) von den Sensoren abgekoppelt oder mit defekten Sensoren verbunden sind.

2. Bewässerungssteuerungssystem (100) nach Anspruch 1, wobei die Ausgabe eines Sensors einen Widerstandszustand (R) umfasst.

3. Bewässerungssteuerungssystem (100) nach Anspruch 2, wobei der Widerstandszustand (R) einer oder mehreren Bodenbedingungen entspricht.

4. Bewässerungssteuerungssystem (100) nach Anspruch 2, wobei der Widerstandszustand (R) einem Defekt des Sensors entspricht.

5. Bewässerungssteuerungssystem (100) nach Ansprüchen 2 bis 4, wobei jeder Sensor-Verbinder eine Detektor-Schaltung (206) zum Detektieren des Widerstandszustands (R) des Sensors umfasst.

6. Bewässerungssteuerungssystem (100) nach Anspruch 5, wobei die Detektor-Schaltung (206) einen Widerstandszustand detektiert, wenn der Sensor von dem entsprechenden Sensor-Verbinder abgekoppelt ist.

7. Bewässerungssteuerungssystem (100) nach Anspruch 6, wobei der Widerstandszustand, der einem Defekt des Sensors entspricht, dem Widerstandszustand ähnlich ist, der der Abkopplung des Sensors von dem entsprechenden Sensor-Verbinder entspricht.

8. Bewässerungssteuerungssystem (100) nach Anspruch 1, wobei die Ausgabe eines Sensors einen digital codierten Status umfasst.

9. Bewässerungssteuerungssystem (100) nach einem der vorhergehenden Ansprüche, wobei einige der Sensor-Verbinder (CV1, CV2, CV3) nicht physisch umgesetzt sind, sondern lediglich virtuell innerhalb der Steuerung 202 existieren, während alle von ihnen einer gemeinsamen physisch umgesetzten Sensor-Schnittstelle SI zugeordnet sind, und wohingegen jeder dieser virtuellen Sensorverbinder (CV1, CV2, CV3) einem speziell dafür vorgesehenen einzelnen Bewässerungskanal (C3,1, C3,2, C3,3) zugewiesen ist.

10. Bewässerungssteuerungssystem (100) nach einem der vorhergehenden Ansprüche, wobei die Steuerung 202 die Benutzer im Falle, dass einer der Sensoren S1 oder S2 defekt ist oder eine andere abnormale Bedingung wie entladene Batterie, Überhitzen der Elektronikschaltung oder ein defektes Sensorkabel anzeigt, alarmiert.

11. Bewässerungssteuerungssystem (100) nach einem der vorhergehenden Ansprüche, wobei mehrere Bewässerungskanäle (C4,1, C4,2, C4,3) alle einem einzelnen Sensor-Verbinder (CN1, CN2, ..., CNn) zugeordnet sind.

12. Bewässerungssteuerungssystem (100) nach einem der vorhergehenden Ansprüche, wobei das Steuerungssystem (100) zusätzliche Bewässerungskanäle (C0,1, C0,2, C0,3, C6,1, C6,2, C6,3) einschließt, denen kein Sensor-Verbinder (CN1, CN2, ..., CNn) entspricht.

13. Bewässerungssteuerungssystem (100) nach einem der vorhergehenden Ansprüche, wobei der Sensor ein Bodenfeuchtigkeitssensor oder ein Regensensor ist.

14. Bewässerungssteuerungssystem (100) nach einem der vorhergehenden Ansprüche, wobei einer oder mehrere Sensoren (S1, S2, ..., Sm) durch Kombinieren mehrerer einzelner Sensoren, insbesondere eines Feuchtigkeitssensors und eines Regensensors gebildet werden, oder wobei einer oder mehrere Sensor-Verbinder (CN1, ..., CNn) die gleichzeitige Verbindung mehrerer Sensoren, insbesondere eines Feuchtigkeitssensors und eines Regensensors zulassen.

15. Bewässerungssteuerungssystem (100) nach einem der vorhergehenden Ansprüche, wobei einer oder mehrere Bewässerungskanäle (C1, ..., Cn) basierend auf dem Status eines zusätzlichen Sensors, der nicht mit einem der Sensor-Verbinder (CN1, ..., CNn) verbunden ist, zusätzlich gesteuert werden könnten.

## Revendications

1. Système de commande d'irrigation (100) comprenant :
un dispositif de commande (202) pour commander des canaux d'irrigation multiples (C1, C2, ..., Cn) ;
une interface de capteurs (204) connectée au dispositif de commande (202) ;
des connecteurs de capteurs multiples (CN1, CN2, ..., CNn) correspondant à chacun des canaux d'irrigation multiples (C1, C2, ..., Cn) prévus sur l'interface de capteurs (204) ; et
un ou plusieurs capteurs (S1, S2, ..., Sm) connectés aux connecteurs de capteurs (CN1, CN2, ..., CNn), un capteur unique (S1, S2) étant connecté à un connecteur de capteur unique (CN1, CN4) et étant configuré de façon à fournir une sortie au dispositif de commande (202) de manière à ce que le canal d'irrigation (C1, C4) correspondant au connecteur de capteur (CN1, CN4) soit commandé en se basant sur la sortie du capteur (S1, S2) ;
**caractérisé en ce que**
la sortie d'un capteur unique (S1, S2) connecté à un connecteur de capteur (CN1, CN2) est utilisée de façon à commander sélectivement un ou plusieurs canaux d'irrigation (C2, C3, C5) correspondant à des connecteurs de capteurs consécutifs (CN2, CN3, CN5) précédant ou suivant immédiatement le capteur de connecteur (CN1, CN4), les connecteurs de capteurs consécutifs (CN2, CN3, CN5) étant déconnectés des capteurs ou étant connectés à des capteurs défectueux.

2. Système de commande d'irrigation (100) selon la revendication 1, dans lequel la sortie d'un capteur comprend un état de résistance (R).

3. Système de commande d'irrigation (100) selon la revendication 2, dans lequel l'état de résistance (R) correspond à une ou plusieurs conditions du sol.

4. Système de commande d'irrigation (100) selon la revendication 2, dans lequel l'état de résistance (R) correspond à un défaut du capteur.

5. Système de commande d'irrigation (100) selon les revendications 2 à 4, dans lequel chaque connecteur de capteur comprend un circuit détecteur (206) pour détecter l'état de résistance (R) du capteur.

6. Système de commande d'irrigation (100) selon la revendication 5, le circuit détecteur (206) détectant un état de résistance si le capteur est déconnecté du connecteur de capteur correspondant.

7. Système de commande d'irrigation (100) selon la revendication 6, dans lequel l'état de résistance correspondant à un défaut du capteur est similaire à l'état de résistance correspondant à la déconnexion du capteur du connecteur de capteur correspondant.

8. Système de commande d'irrigation (100) selon la revendication 1, dans lequel la sortie d'un capteur comprend un état codé numériquement (R).

9. Système de commande d'irrigation (100) selon l'une quelconque des revendications précédentes, dans lequel certains des connecteurs de capteurs (CV1, CV2, CV3) ne sont pas réalisés physiquement mais n'existent que virtuellement à l'intérieur du dispositif de commande (202) tandis que tous sont attribués à une interface commune de capteurs réalisés physiquement SI, et tandis que chacun de ces connecteurs de capteurs virtuels (CV1, CV2, CV3) est attribué à un canal d'irrigation dédié individuellement (C3,1, C3,2, C3,3).

10. Système de commande d'irrigation (100) selon l'une quelconque des revendications précédentes, dans lequel le dispositif de commande (202) alerte l'utilisateur au cas où n'importe lequel des capteurs S1 ou S2 est défectueux ou indique toute autre condition anormale telle pile faible, échauffement anormal du circuit électronique ou un câble de capteur défectueux.

11. Système de commande d'irrigation (100) selon l'une quelconque des revendications précédentes, dans lequel une pluralité de canaux d'irrigation (C4,1, C4,2, C4,3) sont tous attribués à un seul connecteur de capteur (CN1, CN2, ..., CNn).

12. Système de commande d'irrigation (100) selon l'une quelconque des revendications précédentes, dans lequel le système de commande (100) incorpore des canaux d'irrigation supplémentaires (C0,1, C0,2, C0,3, C6,1, C6,2, C6,3) auxquels aucun connecteur de capteur (CN1, CN2, ..., CNn) ne correspond.

13. Système de commande d'irrigation (100) selon l'une quelconque des revendications précédentes, dans lequel capteur est un capteur d'humidité du sol ou un capteur de pluie.

14. Système de commande d'irrigation (100) selon l'une quelconque des revendications précédentes, dans lequel un ou plusieurs capteurs (S1, S2, ..., Sm) sont formés en combinant une pluralité de capteurs uniques, en particulier un capteur d'humidité et un capteur de pluie, ou dans lequel un ou plusieurs des connecteurs de capteurs (CN1, ..., CNn) permettent la connexion simultanée d'une pluralité de capteurs, en particulier d'un capteur d'humidité et d'un capteur de pluie.

15. Système de commande d'irrigation (100) selon l'une quelconque des revendications précédentes, dans lequel un ou une pluralité de canaux d'irrigation (C1, ..., CNn) pourraient être commandés en plus en se basant sur l'état d'un capteur supplémentaire qui n'est connecté à aucun des connecteurs de capteurs (CN1, ..., CNn).
